# EUROPEAN PATENT APPLICATION

(11) **EP 4 303 068 A2**
(43) Date of publication of application: **10.01.2024**
(21) Application number: 23162198.8
(22) Date of filing: 15.03.2023
(51) Int. Cl.: B60L 53/22, B60L 53/16, B60L 53/24, B60L 53/62

(54) **MULTI-MOTOR HIGH-VOLTAGE DC CHARGING COMPATIBLE ADAPTER DEVICE, SYSTEM AND CONTROL METHOD, AND AUTOMOBILE**

(30) Priority: 16.06.2022 CN 202210682378
(71) Applicant: Chongqing Changan New Energy Vehicles Technology Co., Ltd, Chongqing 401133 (CN)
(72) Inventor: ZHAO, Wei, Chongqing, 401133 (CN); PENG, Qianlei, Chongqing, 401133 (CN); DU, Changhong, Chongqing, 401133 (CN); ZHENG, Yuan, Chongqing, 401133 (CN); ZHANG, Yi, Chongqing, 401133 (CN); ZHOU, Anjian, Chongqing, 401133 (CN); ZHOU, Hongbo, Chongqing, 401133 (CN); DENG, Chenghao, Chongqing, 401133 (CN)
(74) Representative: 2K Patentanwälte Blasberg Kewitz & Reichel

(57) **Abstract**

A multi-motor high-voltage DC charging compatible adapter device includes a high-voltage relay K1, a high-voltage relay K2, a high-voltage relay K3, a high-voltage relay K4, a resistor R3, capacitor C3, a high-voltage DC charging compatible adapter device controller, a high-voltage port and a low-voltage port. A system and a control method and an automobile is provided. The low-voltage port is connected with the high-voltage DC charging compatible adapter device controller. The high-voltage port includes in+, in-, out+, out-A1, out-A2 and out-B, the in+ and out+ are respectively connected with one end of K3. The other end of K3 is connected with out-A1 via R3. C3 and R3 are connected in parallel. A connection point of out-A1 and R3 is connected with out-A2 via K4. The connection point of out-A1 and R3 is connected with out-B through K1, K2 successively. A connection point of K1 and K2 is connected with in-.

## Description

### TECHNICAL FIELD

The disclosure relates to the technical field of high-voltage DC charging for new energy multi-motor electric vehicles, in particular to a multi-motor high-voltage DC charging compatible adapter device, system and control method, and an automobile.

### BACKGROUND

Users of new energy electric vehicles have higher and higher requirements for battery life, and battery pack solutions using multi-battery cell modules in parallel to form larger power capacity and higher voltage levels are also increasingly used in new energy electric vehicles. At present, there are many types of charging piles on the market, mainly divided into two types: 800V and 500V. If the battery voltage level of the electric vehicle is higher than the voltage level of the charging pile, there will be situations where the battery cannot be charged or not fully charged, which will affect the user's experience of new energy electric vehicles and hinder the further popularization of new energy electric vehicles.

For new energy multi-motor electric vehicles, a realization of a model that is compatible with different voltage levels of high-voltage DC charging piles, full use of the conventional multi-motor hardware advantages to achieve greater charging power and users' fast charging needs is crucial to improving the user's experience of new energy electric vehicles. Considering the needs of users for fast charging and the manufacturing cost of new energy electric vehicles, based on the conventional power system hardware of multi-motor electric vehicles, compatibility and adaptation of high-voltage DC charging and higher charging power through adding specific module devices are the focus of competition in the industry.

Therefore, it is necessary to develop a new multi-motor high-voltage DC charging compatible adapter device, system, control method, and automobile.

### SUMMARY

The disclosure provides a multi-motor high-voltage DC charging compatible adapter device, system and control method, and an automobile, which can form a system that has compatible adaptation functions for high-voltage DC charging piles with different voltage levels and can achieve greater charging power.

In one hand, the disclosure provides a multi-motor high-voltage DC charging compatible adapter device, including a high-voltage relay K1, a high-voltage relay K2, a high-voltage relay K3, a high-voltage relay K4, a resistor R3, capacitor C3, a high-voltage DC charging compatible adapter device controller, a high-voltage port and a low-voltage port;
the low-voltage port is connected with the high-voltage DC charging compatible adapter device controller, the low-voltage port comprises a low-voltage power supply port and a low-voltage communication port,
the high-voltage port comprises a positive terminal in+ of a high-voltage DC input terminal, a negative terminal in- of a high-voltage DC input terminal, a positive terminal out+ of a high-voltage DC output terminal, a negative terminal out-A1 of a high-voltage DC output terminal, a negative terminal out-A2 of the high-voltage DC output terminal and a negative terminal out-B of the high-voltage DC output terminal, the positive terminal in+ of the high-voltage DC input terminal and the positive terminal out+ of the high-voltage DC output terminal are respectively connected with one end of the high-voltage relay K3, the other end of the high-voltage relay K3 is connected with the negative terminal out-A1 of the high-voltage DC output terminal through the resistor R3, the capacitor C3 and resistor R3 are connected in parallel, a connection point between the negative terminal out-A1 of the high-voltage DC output terminal and the resistor R3 is connected with the negative terminal out-A2 of the high-voltage DC output terminal through the high-voltage relay K4, the connection point between the negative terminal out-A1 of the high-voltage DC output terminal and the resistor R3 is further connected with the negative terminal out-B of the high-voltage DC output terminal through the high-voltage relay K1 and the high-voltage relay K2 successively, a connection point of the high-voltage relay K1 and the high-voltage relay K2 is connected with the negative terminal in- of the high-voltage DC input terminal,
the high-voltage DC charging compatible adapter device controller is configured to be with communication functions, high-voltage relay K2 driving and control functions, high-voltage relay K1 driving and control functions, high-voltage relay K3 driving and control functions, high-voltage relay K4 driving and control functions, a capacitor C3 voltage detection function and a communication function, and a function of detecting a capacitor voltage UC3 and sending it out in real time through the low-voltage communication port, and the high-voltage DC charging compatible adapter device controller is respectively connected with control terminals of the high-voltage relay K1, the high-voltage relay K2, the high-voltage relay K3, and the high-voltage relay K4.

On a second hand, the disclosure provides a multi-motor high-voltage DC charging compatible adapter device, including a high-voltage relay K1, a high-voltage relay K2, a high-voltage relay K3, a high-voltage relay K4, a resistor R3, capacitor C3, a high-voltage DC charging compatible adapter device controller, a high-voltage port, a low-voltage port and an inductor L1;
the low-voltage port is connected with the high-voltage DC charging compatible adapter device controller, the low-voltage port comprises a low-voltage power supply port and a low-voltage communication port,
the high-voltage port comprises a positive terminal in+ of a high-voltage DC input terminal, a negative terminal in- of a high-voltage DC input terminal, a positive terminal out+ of a high-voltage DC output terminal, a negative terminal out-A1 of a high-voltage DC output terminal, a negative terminal out-A2 of the high-voltage DC output terminal and a negative terminal out-B of the high-voltage DC output terminal, the positive terminal in+ of the high-voltage DC input terminal and the positive terminal out+ of the high-voltage DC output terminal are respectively connected with one end of the high-voltage relay K3, the other end of the high-voltage relay K3 and the inductor L1 is connected with the negative terminal out-A1 of the high-voltage DC output terminal through the resistor R3, the capacitor C3 and resistor R3 are connected in parallel, a connection point between the inductor L1 and the resistor R3 is connected with the negative terminal out-A2 of the high-voltage DC output terminal through the high-voltage relay K4, the connection point between the inductor L1 and the resistor R3 is further connected with the negative terminal out-B of the high-voltage DC output terminal through the high-voltage relay K1 and the high-voltage relay K2 successively, a connection point of the high-voltage relay K1 and the high-voltage relay K2 is connected with the negative terminal in- of the high-voltage DC input terminal,
the high-voltage DC charging compatible adapter device controller is configured to be with communication functions, high-voltage relay K2 driving and control functions, high-voltage relay K1 driving and control functions, high-voltage relay K3 driving and control functions, high-voltage relay K4 driving and control functions, a capacitor C3 voltage detection function and a communication function, and a function of detecting a capacitor voltage UC3 and sending it out in real time through the low-voltage communication port, and the high-voltage DC charging compatible adapter device controller is respectively connected with control terminals of the high-voltage relay K1, the high-voltage relay K2, the high-voltage relay K3, and the high-voltage relay K4.

On a third hand, the disclosure provides a multi-motor high-voltage DC charging compatible adapter device, including a high-voltage relay K1, a high-voltage relay K2, a high-voltage relay K3, a high-voltage relay K4, a resistor R3, capacitor C3, a high-voltage DC charging compatible adapter device controller, a high-voltage port, a low-voltage port, an inductor L1 and an inductor L2;
the low-voltage port is connected with the high-voltage DC charging compatible adapter device controller, the low-voltage port comprises a low-voltage power supply port and a low-voltage communication port,
the high-voltage port comprises a positive terminal in+ of a high-voltage DC input terminal, a negative terminal in- of a high-voltage DC input terminal, a positive terminal out+ of a high-voltage DC output terminal, a negative terminal out-A1 of a high-voltage DC output terminal, a negative terminal out-A2 of the high-voltage DC output terminal and a negative terminal out-B of the high-voltage DC output terminal, the positive terminal in+ of the high-voltage DC input terminal and the positive terminal out+ of the high-voltage DC output terminal are respectively connected with one end of the high-voltage relay K3, the other end of the high-voltage relay K3 and the inductor L1 is connected with the negative terminal out-A1 of the high-voltage DC output terminal through the resistor R3, the capacitor C3 and resistor R3 are connected in parallel, a connection point of the inductor L1 and the resistor R3 is connected with the negative terminal out-A2 of the high-voltage DC output terminal through the inductor L2, the high-voltage relay K4 successively, a connection point of the high-voltage relay K1 and the high-voltage relay K2 is connected with the negative terminal in- of the high-voltage DC input terminal,
the high-voltage DC charging compatible adapter device controller is configured to be with communication functions, high-voltage relay K2 driving and control functions, high-voltage relay K1 driving and control functions, high-voltage relay K3 driving and control functions, high-voltage relay K4 driving and control functions, a capacitor C3 voltage detection function and a communication function, and a function of detecting a capacitor voltage UC3 and sending it out in real time through the low-voltage communication port, and the high-voltage DC charging compatible adapter device controller is respectively connected with control terminals of the high-voltage relay K1, the high-voltage relay K2, the high-voltage relay K3, and the high-voltage relay K4.

On a fourth hand, the disclosure provides a multi-motor high-voltage DC charging compatible adapter device, including a high-voltage relay K1, a high-voltage relay K2, a high-voltage relay K3, a high-voltage relay K4, a resistor R3, capacitor C3, a high-voltage DC charging compatible adapter device controller, a high-voltage port, a low-voltage port and an inductor L2;
the low-voltage port is connected with the high-voltage DC charging compatible adapter device controller, the low-voltage port comprises a low-voltage power supply port and a low-voltage communication port,
the high-voltage port comprises a positive terminal in+ of a high-voltage DC input terminal, a negative terminal in- of a high-voltage DC input terminal, a positive terminal out+ of a high-voltage DC output terminal, a negative terminal out-A1 of a high-voltage DC output terminal, a negative terminal out-A2 of the high-voltage DC output terminal and a negative terminal out-B of the high-voltage DC output terminal, the positive terminal in+ of the high-voltage DC input terminal and the positive terminal out+ of the high-voltage DC output terminal are respectively connected with one end of the high-voltage relay K3, the other end of the high-voltage relay K3 is connected with the negative terminal out-A1 of the high-voltage DC output terminal through the resistor R3, the capacitor C3 and resistor R3 are connected in parallel, a connection point between the negative terminal out-A1 of the high-voltage DC output terminal and the resistor R3 is connected with the negative terminal out-A2 of the high-voltage DC output terminal through the inductor L2 and the high-voltage relay K4 successively, the connection point between the negative terminal out-A1 of the high-voltage DC output terminal and the resistor R3 is further connected with the negative terminal out-B of the high-voltage DC output terminal through the high-voltage relay K1 and the high-voltage relay K2 successively, a connection point of the high-voltage relay K1 and the high-voltage relay K2 is connected with the negative terminal in- of the high-voltage DC input terminal,
the high-voltage DC charging compatible adapter device controller is configured to be with communication functions, high-voltage relay K2 driving and control functions, high-voltage relay K1 driving and control functions, high-voltage relay K3 driving and control functions, high-voltage relay K4 driving and control functions, a capacitor C3 voltage detection function and a communication function, and a function of detecting a capacitor voltage UC3 and sending it out in real time through the low-voltage communication port, and the high-voltage DC charging compatible adapter device controller is respectively connected with control terminals of the high-voltage relay K1, the high-voltage relay K2, the high-voltage relay K3, and the high-voltage relay K4.

On a fifth hand, the disclosure provides a first electric drive and a first controller, a second electric drive and a second controller, a battery and a battery controller, a vehicle controller and the multi-motor high-voltage DC charging compatible adapter device of the disclosure;
the positive terminal in+ of the high-voltage DC input terminal of the multi-motor high-voltage DC charging compatible adapter device is connected with a positive terminal + of the high-voltage DC charging port, the negative terminal in- of the high-voltage DC input terminal of the multi-motor high-voltage DC charging compatible adapter device is connected with a negative terminal - of the high-voltage DC charging port, the positive terminal out+ of the high-voltage DC output terminal of the multi-motor high-voltage DC charging compatible adapter device is connected with a third positive terminal +B of the battery controller, the negative terminal out-A1 of the high-voltage DC output terminal of the multi-motor high-voltage DC charging compatible adapter device is connected with a first motor neutral point terminal N1 of the first electric drive controller, the negative terminal out-A2 of the high-voltage DC output terminal of the multi-motor high-voltage DC charging compatible adapter device is connected with a second motor neutral point terminal N2 of the second electric drive controller, the negative terminal out-B of the high-voltage DC output terminal of the multi-motor high-voltage DC charging compatible adapter device is connected with a third negative terminal -B of the battery controller, a positive terminal + of the first electric drive controller is connected with a first positive terminal +A1 of the battery controller, a negative terminal - of the first electric drive controller is connected with a first negative terminal -A1 of the battery controller, a positive terminal + of the second electric drive controller is connected with a second positive terminal +A2 of the battery controller, the negative terminal - of the second electric drive controller is connected with a second negative terminal -A2 of the battery controller,
the multi-motor high-voltage DC charging compatible adapter device is connected with the first electric drive controller, the second electric drive controller, the battery controller and the vehicle controller through a low-voltage wiring harness, and when connecting a charging pile, the high-voltage DC input terminal of the multi-motor high-voltage DC charging compatible adapter device is connected with a high-voltage terminal of the charging pile, and the battery controller is connected with a charging pile controller through a low-voltage wiring harness.

On a sixth hand, the disclosure provides a control method of a multi-motor high-voltage DC charging compatible adapter system, using the multi-motor high-voltage DC charging compatible adapter system of the disclosure, after the multi-motor high-voltage DC charging compatible adapter system connected with a high-voltage DC charging pile, the control method includes following operations:
operation 1: connecting the high-voltage DC charging port with the high-voltage DC charging pile;
operation 2: detecting, by the battery controller, whether physically connecting the charging pile successfully, if yes, powering on, matching a low-voltage auxiliary power supply, and entering operation 3, otherwise returning to continue the detection;
operation 2: detecting, by the battery controller, whether physically connecting the charging pile successfully, if yes, powering on, matching a low-voltage auxiliary power supply, and entering operation 3, otherwise returning to continue the detection;
operation 3: detecting, by the battery controller, whether receiving a handshake message of the charging pile, if yes, sending a charging handshake message to the charging pile, including a maximum allowable total charging voltage of the battery, and entering operation 4, otherwise returning to continue the detection, if timeout expires, reporting a fault prompt and stopping the charging;
operation 4: detecting, by the battery controller, whether receiving a 0x00 identification message of the charging pile, if yes, sending the identification message of the battery controller and vehicle controller to the charging pile, including battery information and protocol version, and entering operation 5, otherwise returning to continue the detection, if timeout expires, reporting a fault prompt and stopping the charging;
operation 5: detecting, by the battery controller, whether receiving a 0x00 identification message of the charging pile, if yes, stopping sending the identification messages of the battery controller and the vehicle controller to the charging pile, and starting to send charging parameter messages of the battery to the charging pile including a maximum allowable charging voltage, a maximum allowable charging current, and a current battery voltage, when the current battery voltage being min [the current voltage of the battery-10V, 450V] (a minimum of a range between the current voltage of the battery-10V and 450V), entering operation 6, otherwise returning to continue to send the identification messages of the battery controller and the vehicle controller to the charging pile, if timeout expires, reporting a fault prompt and stopping the charging;
operation 6: detecting, by the battery controller, whether receiving a message of a charging pile time synchronization and maximum output capacity, including charging pile time synchronization information, maximum output voltage, minimum output voltage, maximum output current, minimum output current, if yes, stopping sending the parameter messages of the battery to the charging pile, starting to send a message that the vehicle is not ready for charging to the charging pile, and entering operation 7, otherwise reporting a fault prompt and stopping the charging;
operation 7: determining, by the battery controller, whether the charging pile parameters are appropriate, if yes, sending a control command to the multi-motor high-voltage DC charging compatible adapter device controller, the first electric drive controller, and the second electric drive controller respectively through the vehicle controller, controlling the high-voltage relays K1 and K3 of the high-voltage DC charging compatible adapter device to close successively, then controlling a main positive relay and main negative relay of the battery to close, then controlling the second electric drive to power on and stand by, controlling the first electric drive to run in a buck mode, and buck outputting and setting the target voltage U_{C3R} of capacitor C3 as the min [the current voltage of the battery-10V, 450V] (minimum of a range between the current voltage of the battery-10V and 450V);
operation 8: determining, by the battery controller, whether a measured voltage UC3 of the capacitor C3 is within ±5% of the target voltage UC3R, if yes, sending a charging ready message of the vehicle to the charging pile, and entering operation 9, otherwise returning to continue the detection, if timeout expires, reporting a fault prompt and stopping the charging;
operation 9: determining, by the battery controller, whether receiving the charging ready message of the charging pile, if yes, stopping to send the charging ready message of the vehicle to the charging pile, and entering operation 10, otherwise returning to continue the detection, if timeout expires, reporting a fault prompt and stopping the charging;
operation 10: determining, by the battery controller, whether the maximum allowable output voltage of the charging pile is less than or equal to 500V, if yes, entering operation 11, otherwise skipping to operation 18;
operation 11: sending a charging demand message and a battery charging overall status message of the battery, by the battery controller, to the charging pile, the charging demand message of the battery including a charging required voltage and charging required current of the battery, requiring a voltage to be min [the current voltage of the battery -10V, 450V] (the minimum of a range between the current voltage of the battery -10V and 450V), and requiring a current to be min [20A, the charging required current of the battery] (a minimum of a range between 20A and the charging required current of the battery);
operation 12: sending the control command, by the battery controller, to the multi-motor high-voltage DC charging compatible adapter device controller, the first electric drive controller, and the second electric drive controller through the vehicle controller, controlling the high-voltage relays K1 and K3 of the high-voltage DC charging compatible adapter device to keep closed, then controlling the relay K4 to close, then controlling the main positive relay and main negative relay of the battery to close, then controlling the first electric drive and second electric drive to be powered on at the same time and operate in a boost mode, and boost outputting and setting the target voltage UCR of the battery as min [the current voltage of the battery-10V, 450V] (the minimum of a range between the current voltage of the battery-10V and 450V);
operation 13: sending the control command to the multi-motor high-voltage DC charging compatible adapter device controller through the vehicle controller after the battery controller detects that the boost mode of the electric drive runs for 1 minute, and controlling the high-voltage relay K3 of the high-voltage DC charging compatible adapter device to disconnect;
operation 14: detecting, by the battery controller, whether the output current of the charging pile is greater than 5A, if yes, adjusting parameters of the charging demand message of the battery, and adjusting the required voltage to rise from 5V/s to min [the maximum allowable total charging voltage of the battery -10V, a maximum allowable total charging voltage of the charging pile -10V] (the minimum of a range between the maximum allowable total charging voltage of the battery -10V and a maximum allowable total charging voltage of the charging pile -10V), requiring the current to be min [20A, the charging demand current of the battery] (the minimum of a range between 20A and the charging demand current of the battery), and then entering operation 15, otherwise returning to continue to the detection;
operation 15: detecting, by the battery controller, whether the output voltage of the charging pile is equal to min [the maximum allowable total charging voltage of the battery -10V, the maximum allowable total charging voltage of the charging pile -10V] (the minimum of a range between the maximum allowable total charging voltage of the battery -10V and a maximum allowable total charging voltage of the charging pile -10V), if yes, adjusting parameters of the charging demand message of the battery, adjusting the required voltage to keep at min [the maximum allowable total charging voltage of the battery -10V, the maximum allowable total charging voltage of the charging pile -10V] (the minimum of a range between the maximum allowable total charging voltage of the battery -10V and a maximum allowable total charging voltage of the charging pile -10V), adjusting the required current to be min [a maximum allowable outputting current of the charging pile, a charging required current of battery] (the minimum of a range between the maximum allowable outputting current of the charging pile and the charging required current of battery), and then entering operation 16, otherwise returning to continue the detection;
operation 16: detecting, by the battery controller, whether the battery is fully charged, if yes, adjusting parameters of the charging demand message of the battery, adjusting the required voltage to keep at min [the maximum allowable total charging voltage of the battery -10V, the maximum allowable total charging voltage of the charging pile -10V] (the minimum of a range between the maximum allowable total charging voltage of the battery -10V and the maximum allowable total charging voltage of the charging pile -10V), adjusting the current to be 0A, and then entering operation 17, otherwise returning to continue the charging;
operation 17: detecting, by the battery controller, whether the output current of the charging pile is equal to 0A, if yes, sending the control command to the battery controller, multi-motor high-voltage DC charging compatible adapter device controller, first electric drive controller, and second electric drive controller through the vehicle controller, controlling the main positive relay and main negative relay of the battery to disconnect, then controlling the first electric drive and second electric drive to run in no mode, then sending charging statistic information, and then ending the charging;
operation 18: detecting, by the battery controller, whether the maximum allowable output voltage of the charging pile is greater than 500V, if yes, sending the charging demand message of the battery and a charging general state message of the battery to the charging pile, the charging demand message of the battery including the charging required voltage of the battery and the charging required current of the battery, requiring the voltage to be the current voltage of the battery and requiring the current to be min [20A, the charging required current of the battery] (the minimum of a range between 20A and the charging required current of the battery);
operation 19: sending the control command, by the battery controller, to the multi-motor high-voltage DC charging compatible adapter device controller, first electric drive controller, and second electric drive controller respectively through the vehicle controller, controlling the high-voltage relays K1 and K3 of the multi-motor high-voltage DC charging compatible adapter device remain closed, then controlling the relay K4 to close, then controlling the main positive relay and the main negative relay of the battery to close, then controlling the first electric drive and second electric drive to power on at the same time and run in the boost mode, boost outputting and setting the target voltage UCR of the battery as the current voltage of the battery +10V;
operation 20: detecting, by the battery controller, whether the output voltage of the charging pile is equal to the current voltage of the battery, if yes, adjusting the parameters of the charging demand message of the battery, requiring the voltage to be kept at the current voltage of the battery, adjusting the required current to be 0A, and then entering operation 21, otherwise returning to continue the detection;
operation 21: detecting, by the battery controller, whether the output current of the charging pile is equal to 0A, if yes, sending the control command to the multi-motor high-voltage DC charging compatible adapter device controller, first electric drive controller, and second electric drive controller through the vehicle controller, controlling the high-voltage relay K1, high-voltage relay K3, and high-voltage relay K4 of the multi-motor high-voltage DC charging compatible adapter device to disconnect successively, then controlling the first electric drive and second electric drive to run in no mode, then controlling the high-voltage relay K2 of the multi-motor high-voltage DC charging compatible adapter device to close, and switching to a direct charging mode;
operation 22: detecting, by the battery controller, whether the battery is fully charged, if yes, adjusting parameters of the charging demand message of the battery, adjusting the required voltage to keep at min [the maximum allowable total charging voltage of the battery -10V, the maximum allowable total charging voltage of the charging pile -10V] (the minimum of a range between the maximum allowable total charging voltage of the battery -10V and the maximum allowable total charging voltage of the charging pile -10V), adjusting the current to be 0A, and then entering operation 23, otherwise returning to continue the charging;
operation 23: detecting, by the battery controller, whether the output current of the charging pile is equal to 0A, if yes, sending the control command to the battery controller and the multi-motor high-voltage DC charging compatible adapter device controller, controlling the main positive relay and main negative relay of the battery to disconnect, then controlling the high-voltage relay K2 of the multi-motor high-voltage DC charging compatible adapter device to disconnect, then sending charging statistic information, and then ending the charging.

On a seventh hand, the disclosure provides an automobile, including the multi-motor high-voltage DC charging compatible adapter system of the disclosure.

The disclosure has following advantages: adding the multi-motor high-voltage DC charging compatible adapter device to the new energy multi-motor electric vehicle power system can form a system that has compatible adaptation functions for high-voltage DC charging piles with different voltage levels and can achieve greater charging power. The corresponding control method provided by the disclosure can realize a compatible adaptation of new energy electric vehicles to high-voltage DC charging piles with different voltage levels and have a higher power charging.

### BRIEF DESCRIPTION OF THE DRAWINGS

FIG. 1 is a schematic structural view of a multi-motor high-voltage DC charging compatible adapter system according to an embodiment of the disclosure.
FIG. 2 is a circuit topology example 1 of the multi-motor high-voltage DC charging compatible adapter device according to an embodiment of the disclosure.
FIG. 3 is a circuit topology example 2 of the multi-motor high-voltage DC charging compatible adapter device according to an embodiment of the disclosure.
FIG. 4 is a circuit topology example 3 of the multi-motor high-voltage DC charging compatible adapter device according to an embodiment of the disclosure.
FIG. 5 is a circuit topology example 4 of the multi-motor high-voltage DC charging compatible adapter device according to an embodiment of the disclosure.
FIG. 6 through FIG. 9 are control flowcharts of the multi-motor high-voltage DC charging compatible adapter system according to an embodiment of the disclosure.
FIG. 10 is a circuit topology example 1 of the multi-motor high-voltage DC charging compatible adapter system according to an embodiment of the disclosure.
FIG. 11 is a circuit topology example 2 of the multi-motor high-voltage DC charging compatible adapter system according to an embodiment of the disclosure.
FIG. 12 is a circuit topology example 3 of the multi-motor high-voltage DC charging compatible adapter system according to an embodiment of the disclosure.
FIG. 13 is a circuit topology example 4 of the multi-motor high-voltage DC charging compatible adapter system according to an embodiment of the disclosure.

### DETAILED DESCRIPTION

The disclosure will be further described below combined with accompanying drawings.

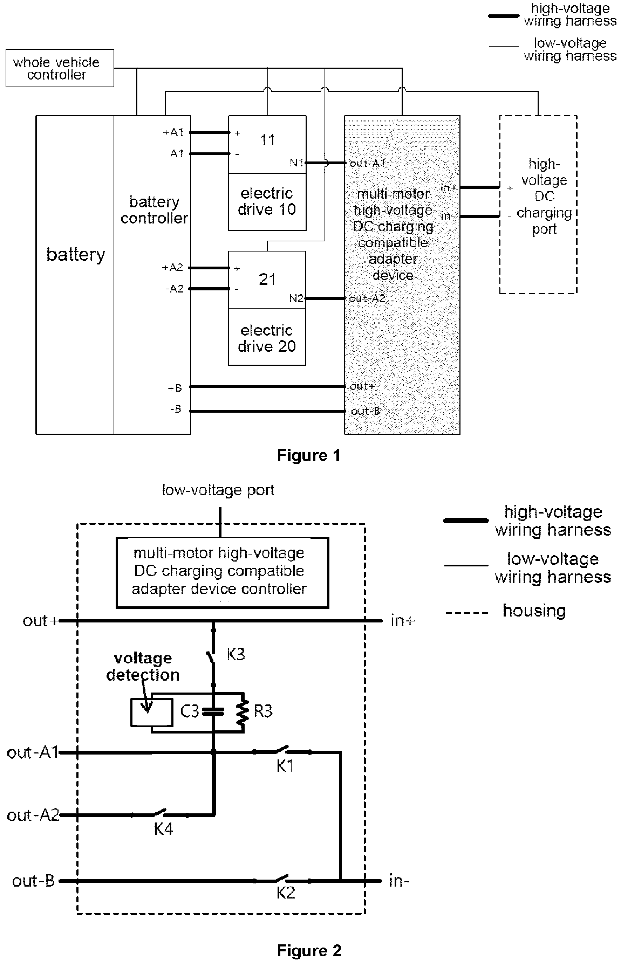

Please refer to FIG. 2. In this embodiment, a multi-motor high-voltage DC charging compatible adapter device includes a high-voltage relay K1, a high-voltage relay K2, a high-voltage relay K3, a high-voltage relay K4, a resistor R3, capacitor C3, a high-voltage DC charging compatible adapter device controller, a high-voltage port and a low-voltage port, and a connection relationship is as follows:
the low-voltage port is connected with the high-voltage DC charging compatible adapter device controller, the low-voltage port comprises a low-voltage power supply port and a low-voltage communication port,
the high-voltage port comprises a positive terminal in+ of a high-voltage DC input terminal, a negative terminal in- of a high-voltage DC input terminal, a positive terminal out+ of a high-voltage DC output terminal, a negative terminal out-A1 of a high-voltage DC output terminal, a negative terminal out-A2 of the high-voltage DC output terminal and a negative terminal out-B of the high-voltage DC output terminal, the positive terminal in+ of the high-voltage DC input terminal and the positive terminal out+ of the high-voltage DC output terminal are respectively connected with one end of the high-voltage relay K3, the other end of the high-voltage relay K3 is connected with the negative terminal out-A1 of the high-voltage DC output terminal through the resistor R3, the capacitor C3 and resistor R3 are connected in parallel, a connection point between the negative terminal out-A1 of the high-voltage DC output terminal and the resistor R3 is connected with the negative terminal out-A2 of the high-voltage DC output terminal through the high-voltage relay K4, the connection point between the negative terminal out-A1 of the high-voltage DC output terminal and the resistor R3 is further connected with the negative terminal out-B of the high-voltage DC output terminal through the high-voltage relay K1 and the high-voltage relay K2 successively, a connection point of the high-voltage relay K1 and the high-voltage relay K2 is connected with the negative terminal in- of the high-voltage DC input terminal,
the high-voltage DC charging compatible adapter device controller is configured to be with communication functions, high-voltage relay K2 driving and control functions, high-voltage relay K1 driving and control functions, high-voltage relay K3 driving and control functions, high-voltage relay K4 driving and control functions, a capacitor C3 voltage detection function and a communication function, and a function of detecting a capacitor voltage UC3 and sending it out in real time through the low-voltage communication port, and the high-voltage DC charging compatible adapter device controller is respectively connected with control terminals of the high-voltage relay K1, the high-voltage relay K2, the high-voltage relay K3, and the high-voltage relay K4.

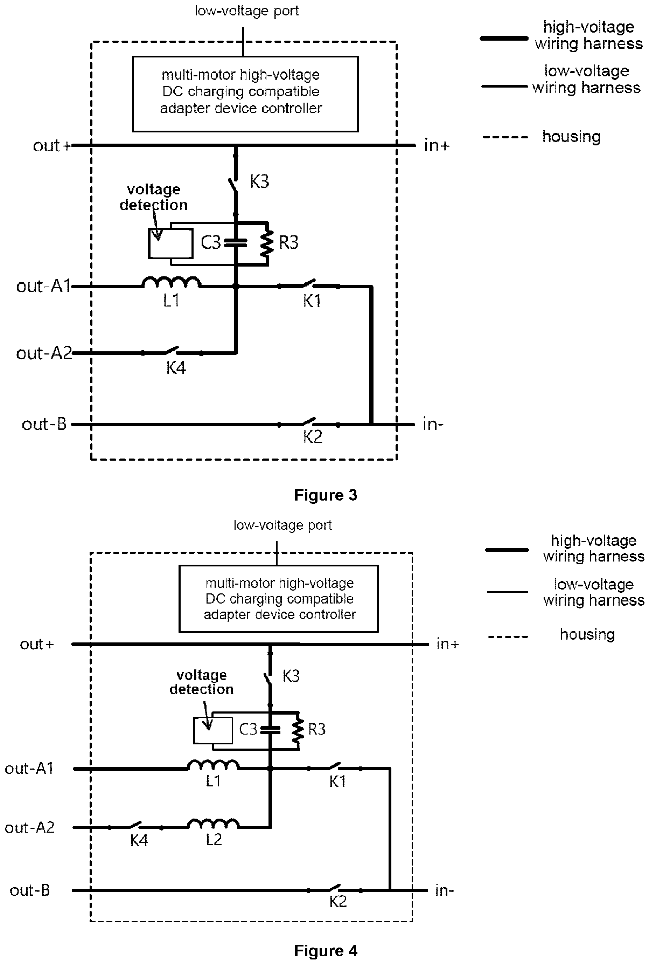

Please refer to FIG. 3. In this embodiment, a multi-motor high-voltage DC charging compatible adapter device includes a high-voltage relay K1, a high-voltage relay K2, a high-voltage relay K3, a high-voltage relay K4, a resistor R3, capacitor C3, a high-voltage DC charging compatible adapter device controller, a high-voltage port, a low-voltage port and an inductor L1, and a specific connection relationship is as follows:
the low-voltage port is connected with the high-voltage DC charging compatible adapter device controller, the low-voltage port comprises a low-voltage power supply port and a low-voltage communication port,
the high-voltage port comprises a positive terminal in+ of a high-voltage DC input terminal, a negative terminal in- of a high-voltage DC input terminal, a positive terminal out+ of a high-voltage DC output terminal, a negative terminal out-A1 of a high-voltage DC output terminal, a negative terminal out-A2 of the high-voltage DC output terminal and a negative terminal out-B of the high-voltage DC output terminal, the positive terminal in+ of the high-voltage DC input terminal and the positive terminal out+ of the high-voltage DC output terminal are respectively connected with one end of the high-voltage relay K3, the other end of the high-voltage relay K3 and the inductor L1 is connected with the negative terminal out-A1 of the high-voltage DC output terminal through the resistor R3, the capacitor C3 and resistor R3 are connected in parallel, a connection point between the inductor L1 and the resistor R3 is connected with the negative terminal out-A2 of the high-voltage DC output terminal through the high-voltage relay K4, the connection point between the inductor L1 and the resistor R3 is further connected with the negative terminal out-B of the high-voltage DC output terminal through the high-voltage relay K1 and the high-voltage relay K2 successively, a connection point of the high-voltage relay K1 and the high-voltage relay K2 is connected with the negative terminal in- of the high-voltage DC input terminal,
the high-voltage DC charging compatible adapter device controller is configured to be with communication functions, high-voltage relay K2 driving and control functions, high-voltage relay K1 driving and control functions, high-voltage relay K3 driving and control functions, high-voltage relay K4 driving and control functions, a capacitor C3 voltage detection function and a communication function, and a function of detecting a capacitor voltage UC3 and sending it out in real time through the low-voltage communication port, and the high-voltage DC charging compatible adapter device controller is respectively connected with control terminals of the high-voltage relay K1, the high-voltage relay K2, the high-voltage relay K3, and the high-voltage relay K4.

Please refer to FIG. 4. In this embodiment, a multi-motor high-voltage DC charging compatible adapter device includes a high-voltage relay K1, a high-voltage relay K2, a high-voltage relay K3, a high-voltage relay K4, a resistor R3, capacitor C3, a high-voltage DC charging compatible adapter device controller, a high-voltage port, a low-voltage port, an inductor L1 and an inductor L2, and a specific connection relationship is as follows:
the low-voltage port is connected with the high-voltage DC charging compatible adapter device controller, the low-voltage port comprises a low-voltage power supply port and a low-voltage communication port,
the high-voltage port comprises a positive terminal in+ of a high-voltage DC input terminal, a negative terminal in- of a high-voltage DC input terminal, a positive terminal out+ of a high-voltage DC output terminal, a negative terminal out-A1 of a high-voltage DC output terminal, a negative terminal out-A2 of the high-voltage DC output terminal and a negative terminal out-B of the high-voltage DC output terminal, the positive terminal in+ of the high-voltage DC input terminal and the positive terminal out+ of the high-voltage DC output terminal are respectively connected with one end of the high-voltage relay K3, the other end of the high-voltage relay K3 and the inductor L1 is connected with the negative terminal out-A1 of the high-voltage DC output terminal through the resistor R3, the capacitor C3 and resistor R3 are connected in parallel, a connection point of the inductor L1 and the resistor R3 is connected with the negative terminal out-A2 of the high-voltage DC output terminal through the inductor L2, the high-voltage relay K4 successively, a connection point of the high-voltage relay K1 and the high-voltage relay K2 is connected with the negative terminal in- of the high-voltage DC input terminal,
the high-voltage DC charging compatible adapter device controller is configured to be with communication functions, high-voltage relay K2 driving and control functions, high-voltage relay K1 driving and control functions, high-voltage relay K3 driving and control functions, high-voltage relay K4 driving and control functions, a capacitor C3 voltage detection function and a communication function, and a function of detecting a capacitor voltage UC3 and sending it out in real time through the low-voltage communication port, and the high-voltage DC charging compatible adapter device controller is respectively connected with control terminals of the high-voltage relay K1, the high-voltage relay K2, the high-voltage relay K3, and the high-voltage relay K4.

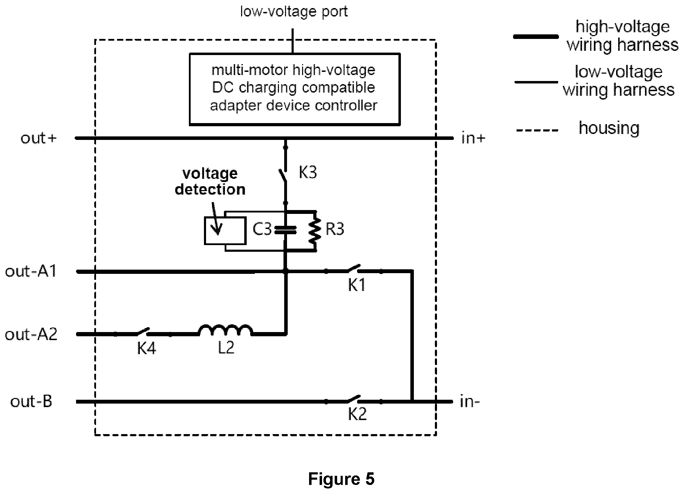

Please refer to FIG. 5. In this embodiment, a multi-motor high-voltage DC charging compatible adapter device includes a high-voltage relay K1, a high-voltage relay K2, a high-voltage relay K3, a high-voltage relay K4, a resistor R3, capacitor C3, a high-voltage DC charging compatible adapter device controller, a high-voltage port, a low-voltage port and an inductor L2, and a specific connection relationship is as follows:
the low-voltage port is connected with the high-voltage DC charging compatible adapter device controller, the low-voltage port comprises a low-voltage power supply port and a low-voltage communication port,
the high-voltage port comprises a positive terminal in+ of a high-voltage DC input terminal, a negative terminal in- of a high-voltage DC input terminal, a positive terminal out+ of a high-voltage DC output terminal, a negative terminal out-A1 of a high-voltage DC output terminal, a negative terminal out-A2 of the high-voltage DC output terminal and a negative terminal out-B of the high-voltage DC output terminal, the positive terminal in+ of the high-voltage DC input terminal and the positive terminal out+ of the high-voltage DC output terminal are respectively connected with one end of the high-voltage relay K3, the other end of the high-voltage relay K3 is connected with the negative terminal out-A1 of the high-voltage DC output terminal through the resistor R3, the capacitor C3 and resistor R3 are connected in parallel, a connection point between the negative terminal out-A1 of the high-voltage DC output terminal and the resistor R3 is connected with the negative terminal out-A2 of the high-voltage DC output terminal through the inductor L2 and the high-voltage relay K4 successively, the connection point between the negative terminal out-A1 of the high-voltage DC output terminal and the resistor R3 is further connected with the negative terminal out-B of the high-voltage DC output terminal through the high-voltage relay K1 and the high-voltage relay K2 successively, a connection point of the high-voltage relay K1 and the high-voltage relay K2 is connected with the negative terminal in- of the high-voltage DC input terminal,
the high-voltage DC charging compatible adapter device controller is configured to be with communication functions, high-voltage relay K2 driving and control functions, high-voltage relay K1 driving and control functions, high-voltage relay K3 driving and control functions, high-voltage relay K4 driving and control functions, a capacitor C3 voltage detection function and a communication function, and a function of detecting a capacitor voltage UC3 and sending it out in real time through the low-voltage communication port, and the high-voltage DC charging compatible adapter device controller is respectively connected with control terminals of the high-voltage relay K1, the high-voltage relay K2, the high-voltage relay K3, and the high-voltage relay K4.

Please refer to FIG. 1. In this embodiment, a multi-motor high-voltage DC charging compatible adapter system includes a first electric drive 10 and a first controller 11, a second electric drive 20 and a second controller 21, a battery and a battery controller, a vehicle controller and the multi-motor high-voltage DC charging compatible adapter device of the embodiment, and a specific connection relationship is as follows:
the positive terminal in+ of the high-voltage DC input terminal of the multi-motor high-voltage DC charging compatible adapter device is connected with a positive terminal + of the high-voltage DC charging port, the negative terminal in- of the high-voltage DC input terminal of the multi-motor high-voltage DC charging compatible adapter device is connected with a negative terminal - of the high-voltage DC charging port, the positive terminal out+ of the high-voltage DC output terminal of the multi-motor high-voltage DC charging compatible adapter device is connected with a third positive terminal +B of the battery controller, the negative terminal out-A1 of the high-voltage DC output terminal of the multi-motor high-voltage DC charging compatible adapter device is connected with a first motor neutral point terminal N1 of the first electric drive controller 11, the negative terminal out-A2 of the high-voltage DC output terminal of the multi-motor high-voltage DC charging compatible adapter device is connected with a second motor neutral point terminal N2 of the second electric drive controller 21, the negative terminal out-B of the high-voltage DC output terminal of the multi-motor high-voltage DC charging compatible adapter device is connected with a third negative terminal -B of the battery controller, a positive terminal + of the first electric drive controller 11 is connected with a first positive terminal +A1 of the battery controller, a negative terminal - of the first electric drive controller 11 is connected with a first negative terminal -A1 of the battery controller, a positive terminal (+) of the second electric drive controller 21 is connected with a second positive terminal +A2 of the battery controller, the negative terminal - of the second electric drive controller 21 is connected with a second negative terminal -A2 of the battery controller,
the multi-motor high-voltage DC charging compatible adapter device is connected with the first electric drive controller 11, the second electric drive controller 21, the battery controller and the vehicle controller through a low-voltage wiring harness, and when connecting a charging pile, the high-voltage DC input terminal of the multi-motor high-voltage DC charging compatible adapter device is connected with a high-voltage terminal of the charging pile, and the battery controller is connected with a charging pile controller through a low-voltage wiring harness.

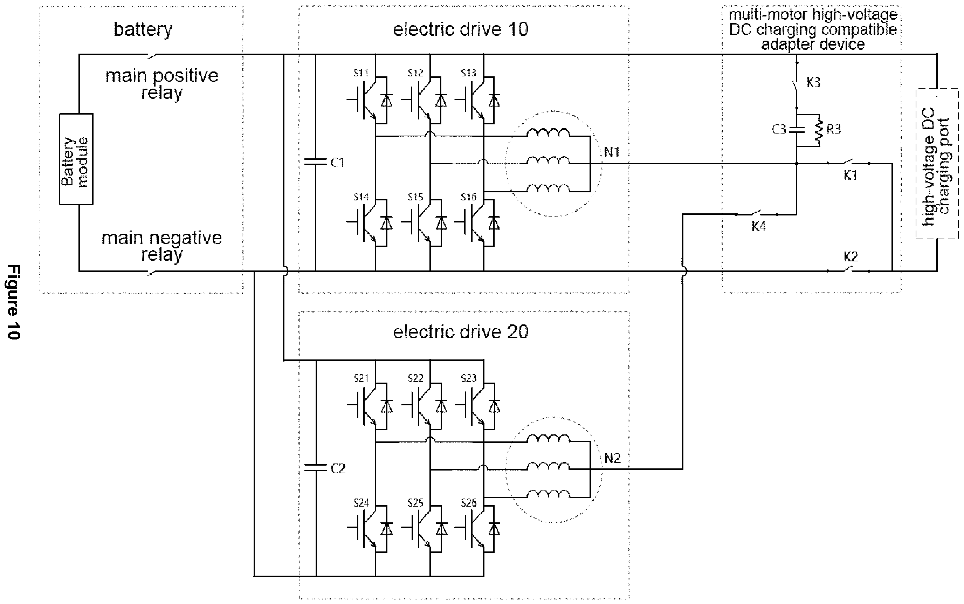

Please refer to FIG. 10. FIG. 10 is a circuit topology example 1 of the multi-motor high-voltage DC charging compatible adapter system in this embodiment. The topology example uses the multi-motor high-voltage DC charging compatible adapter device as shown in FIG. 2. Wherein, the first electric drive 10 and the electric drive 20 respectively adopt a system equivalent circuit topology of an electronically controlled three-phase bridge arm and a parallel operation mode of the corresponding three-phase winding of the motor. A detailed control logic of this topology example is executed according to the control method and operations of the multi-motor high-voltage DC charging compatible adapter device system shown in FIG. 10. A buck mode: the high-voltage relay K1 and high-voltage relay K3 are connected, high-voltage relay K2 and high-voltage relay K4 are disconnected, a main positive relay of the battery and a main negative relay of the battery are connected, a power switch transistor S11 through a power switch transistor S13 are disconnected, a power switch transistor S21 through a power switch through S26 are disconnected, a power switch transistor S14 through a power switch transistor S16 run in the buck mode to realize an buck operation of the battery through the electric drive to the capacitor of the charging port. A boost mode: the high voltage relay K1 and the high voltage relay K4 are connected (switched on), the high voltage relay K2 is disconnected(switched off), the main positive relay and the main negative relay of the battery are connected, the power switch transistor S14 through the power switch transistor S16 are disconnected, the power switch transistor S24 through the power switch transistor S26 are disconnected, the power switch transistor S11 through power switch transistor S13 and the power switch transistor S21 through power switch transistor S23 run in the boost mode, so as to realize a boost operation from the charging port to the battery through the electric drive. A direct charging mode: the high voltage relay K2 is connected, the high voltage relay K1, the high voltage relay K3, and the high voltage relay K4 are disconnected, the main positive relay and the main negative relay of the battery are connected, the power switch transistor S11 through the power switch transistor S16 are disconnected, the power switch transistor S21 through the power switch transistor S26 are disconnected to operate in the direct charging mode, so as to realize a direct charging operation from the charging port to the battery.

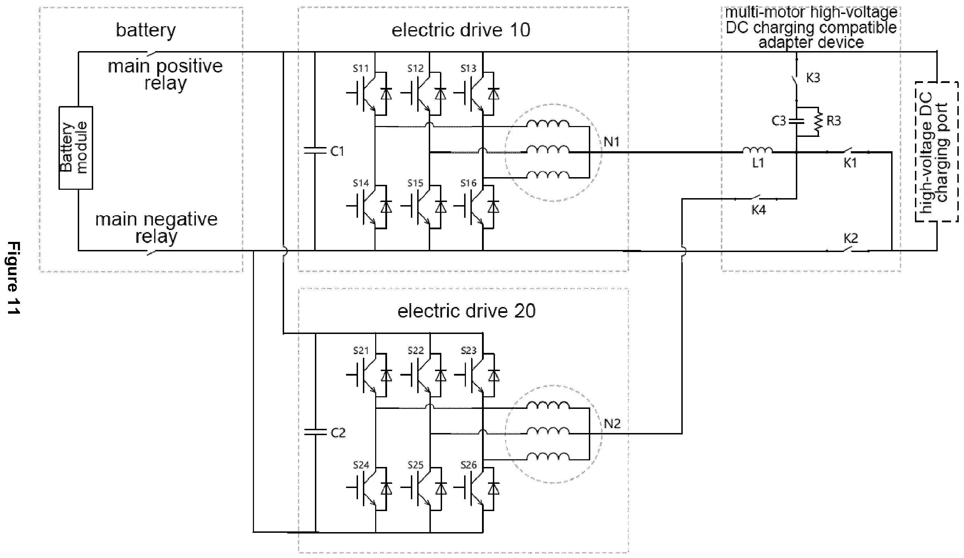

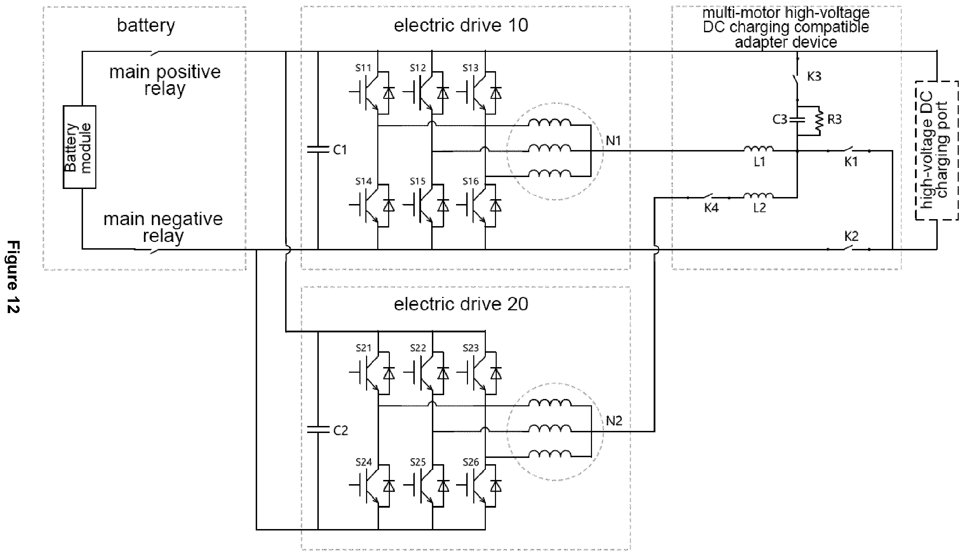

Please refer to FIG. 11, which is a circuit topology example 2 of the multi-motor high-voltage DC charging compatible adapter system in this embodiment. The topology example uses the multi-motor high-voltage DC charging compatible adapter device as shown in FIG. 3. The first electric drive 10 and the second electric drive 20 respectively adopt the system equivalent circuit topology of the electronically controlled three-phase bridge arm and the parallel operation mode of the corresponding three-phase winding of the motor. A detailed control logic of this topology example is executed according to the control method and operations of the multi-motor high-voltage DC charging compatible adapter device system shown in FIG. 12. The buck mode: the high-voltage relay K1 and high-voltage relay K3 are connected, high-voltage relay K2 and high-voltage relay K4 are disconnected, the main positive relay of the battery and the main negative relay of the battery are connected, the power switch transistor S11 through the power switch transistor S13, the power switch transistor S21 through the power switch through S26 are disconnected, the power switch transistor S14 through the power switch transistor S16 run in the buck mode to realize the operation of the battery through the electric drive to the capacitor of the charging port. The boost mode: the high voltage relay K1 and the high voltage relay K4 are connected, the high voltage relay K2 is disconnected, the main positive relay and the main negative relay of the battery are connected, the power switch transistor S14 through the power switch transistor S16, the power switch transistor S24 through the power switch transistor S26 are disconnected, the power switch transistor S11 through power switch transistor S13 and the power switch transistor S21 through power switch transistor S23 run in the boost mode, so as to realize the boost operation from the charging port to the battery through the electric drive. The direct charging mode: the high voltage relay K2 is connected, the high voltage relay K1, the high voltage relay K3, and the high voltage relay K4 are disconnected, the main positive relay and the main negative relay of the battery are connected, the power switch transistor S11 through the power switch transistor S16, the power switch transistor S21 through the power switch transistor S26 are disconnected to operate in the direct charging mode, so as to realize the direct charging operation from the charging port to the battery.

Please refer to FIG. 12, which is a circuit topology example 3 of the multi-motor high-voltage DC charging compatible adapter system in this embodiment. The topology example uses the multi-motor high-voltage DC charging compatible adapter device as shown in FIG. 4. Wherein, the first electric drive 10 and the second electric drive 20 respectively adopt the system equivalent circuit topology of the electronically controlled three-phase bridge arm and the parallel operation mode of the corresponding three-phase winding of the motor. A detailed control logic of this topology example is executed according to the control method and operations of the multi-motor high-voltage DC charging compatible adapter device system shown in FIG. 5. The buck mode: the high-voltage relay K1 and high-voltage relay K3 are connected, high-voltage relay K2 and high-voltage relay K4 are disconnected, the main positive relay of the battery and the main negative relay of the battery are connected, the power switch transistor S11 through the power switch transistor S13, the power switch transistor S21 through the power switch through S26 are disconnected, the power switch transistor S14 through the power switch transistor S16 run in the buck mode to realize the operation of the battery through the electric drive to the capacitor of the charging port. The boost mode: the high voltage relay K1 and the high voltage relay K4 are connected, the high voltage relay K2 is disconnected, the main positive relay and the main negative relay of the battery are connected, the power switch transistor S14 through the power switch transistor S16, the power switch transistor S24 through the power switch transistor S26 are disconnected, the power switch transistor S11 through power switch transistor S13 and the power switch transistor S21 through power switch transistor S23 run in the boost mode, so as to realize the boost operation from the charging port to the battery through the electric drive. The direct charging mode: the high voltage relay K2 is connected, the high voltage relay K1, the high voltage relay K3, and the high voltage relay K4 are disconnected, the main positive relay and the main negative relay of the battery are connected, the power switch transistor S11 through the power switch transistor S16, the power switch transistor S21 through the power switch transistor S26 are disconnected to operate in the direct charging mode, so as to realize the direct charging operation from the charging port to the battery.

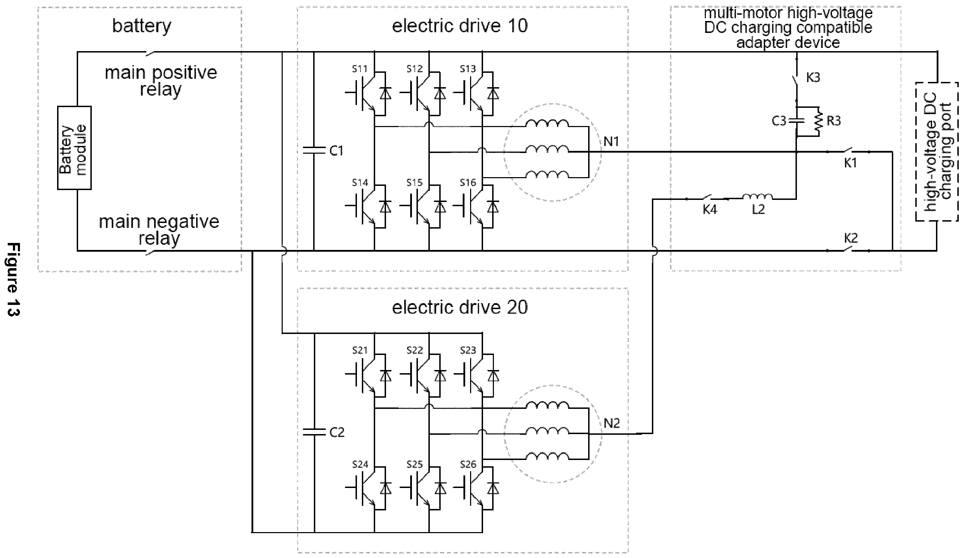

Please refer to FIG. 13, which is a circuit topology example 3 of the multi-motor high-voltage DC charging compatible adapter system in this embodiment. The topology example uses the multi-motor high-voltage DC charging compatible adapter device as shown in FIG. 4. The topology example uses the multi-motor high-voltage DC charging compatible adapter device as shown in FIG. 4. Wherein, the first electric drive 10 and the second electric drive 20 respectively adopt the system equivalent circuit topology of the electronically controlled three-phase bridge arm and the parallel operation mode of the corresponding three-phase winding of the motor. A detailed control logic of this topology example is executed according to the control method and operations of the multi-motor high-voltage DC charging compatible adapter device system shown in FIG. 5. The buck mode: the high-voltage relay K1 and high-voltage relay K3 are connected, high-voltage relay K2 and high-voltage relay K4 are disconnected, the main positive relay of the battery and the main negative relay of the battery are connected, the power switch transistor S11 through the power switch transistor S13, the power switch transistor S21 through the power switch through S26 are disconnected, the power switch transistor S14 through the power switch transistor S16 run in the buck mode to realize the operation of the battery through the electric drive to the capacitor of the charging port. The boost mode: the high voltage relay K1 and the high voltage relay K4 are connected, the high voltage relay K2 is disconnected, the main positive relay and the main negative relay of the battery are connected, the power switch transistor S14 through the power switch transistor S16, the power switch transistor S24 through the power switch transistor S26 are disconnected, the power switch transistor S11 through power switch transistor S13 and the power switch transistor S21 through power switch transistor S23 run in the boost mode, so as to realize the boost operation from the charging port to the battery through the electric drive. The direct charging mode: the high voltage relay K2 is connected, the high voltage relay K1, the high voltage relay K3, and the high voltage relay K4 are disconnected, the main positive relay and the main negative relay of the battery are connected, the power switch transistor S11 through the power switch transistor S16, the power switch transistor S21 through the power switch transistor S26 are disconnected to operate in the direct charging mode, so as to realize the direct charging operation from the charging port to the battery.

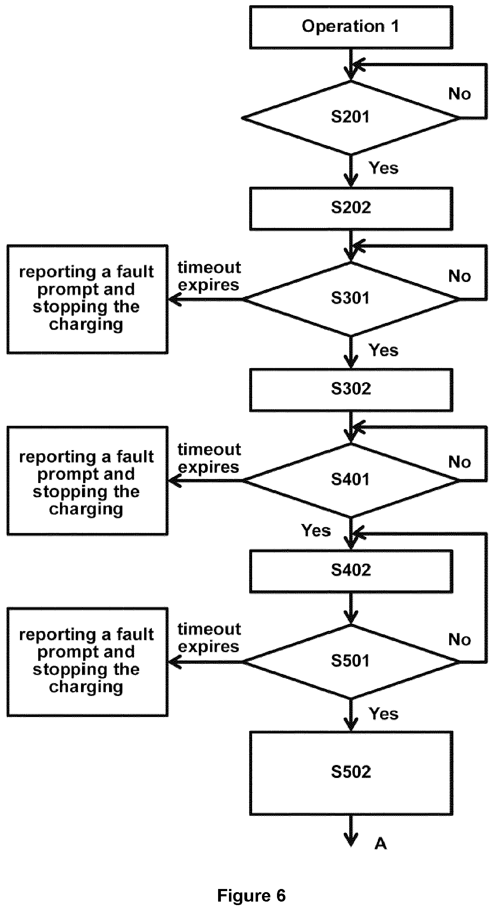

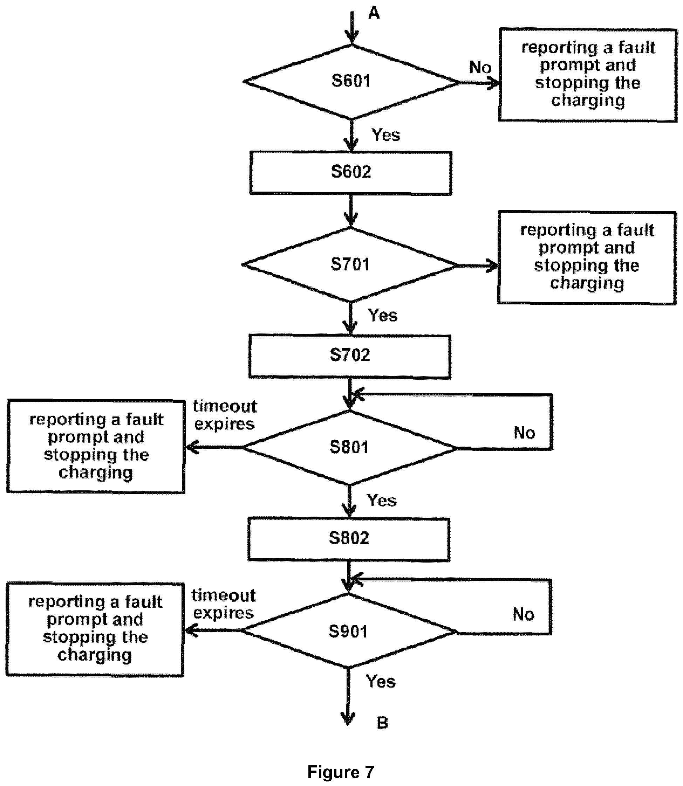

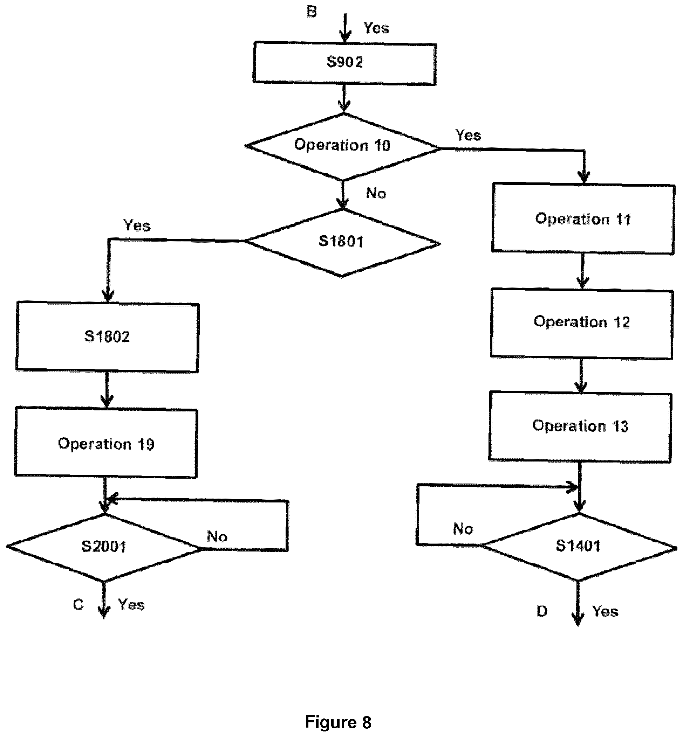

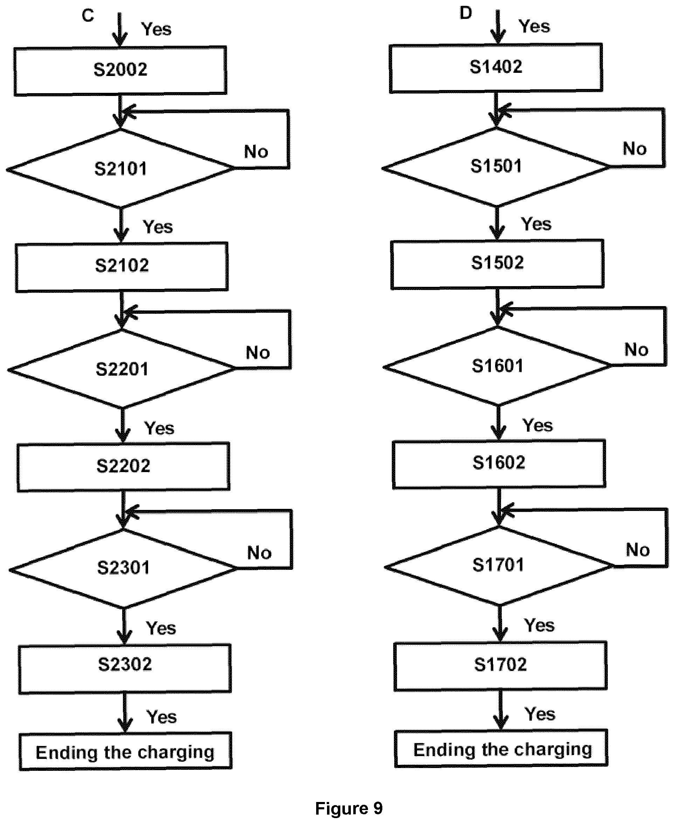

Please refer to FIG. 6 through FIG. 9. In this embodiment, a control method of a multi-motor high-voltage DC charging compatible adapter system uses the multi-motor high-voltage DC charging compatible adapter system of the embodiment, after the multi-motor high-voltage DC charging compatible adapter system connected with a high-voltage DC charging pile, the control method includes following operations:
operation 1: connecting the high-voltage DC charging port with the high-voltage DC charging pile;
operation 2: S201: detecting, by the battery controller, whether physically connecting the charging pile successfully, if yes, S202: powering on, matching a low-voltage auxiliary power supply, and entering operation 3, otherwise returning to S201 continue the detection;
operation 3: S301: detecting, by the battery controller, whether receiving a handshake message of the charging pile, if yes, S302: sending a charging handshake message to the charging pile, including a maximum allowable total charging voltage of the battery, and entering operation 4, otherwise returning to S301 continue the detection, if timeout expires, reporting a fault prompt and stopping the charging;
operation 4: S401: detecting, by the battery controller, whether receiving a 0x00 identification message of the charging pile, if yes, S402: sending the identification message of the battery controller and vehicle controller to the charging pile, including battery information and protocol version, and entering operation 5, otherwise returning to S401 continue the detection, if timeout expires, reporting a fault prompt and stopping the charging;
operation 5: S501: detecting, by the battery controller, whether receiving a 0x00 identification message of the charging pile, if yes, S502: stopping sending the identification messages of the battery controller and the vehicle controller to the charging pile, and starting to send charging parameter messages of the battery to the charging pile including a maximum allowable charging voltage, a maximum allowable charging current, and a current battery voltage, when the current battery voltage being min [the current voltage of the battery-10V, 450V] (a minimum of a range between the current voltage of the battery-10V and 450V), entering operation 6, otherwise returning to continue S402 to send the identification messages of the battery controller and the vehicle controller to the charging pile, if timeout expires, reporting a fault prompt and stopping the charging;
operation 6: S601: detecting, by the battery controller, whether receiving a message of a charging pile time synchronization and maximum output capacity, including charging pile time synchronization information, maximum output voltage, minimum output voltage, maximum output current, minimum output current, if yes, S602: stopping sending the parameter messages of the battery to the charging pile, starting to send a message that the vehicle is not ready for charging to the charging pile, and entering operation 7, otherwise reporting a fault prompt and stopping the charging;
operation 7: S701: determining, by the battery controller, whether the charging pile parameters are appropriate, if yes, S702: sending a control command to the multi-motor high-voltage DC charging compatible adapter device controller, the first electric drive controller 11, and the second electric drive controller 21 respectively through the vehicle controller, controlling the high-voltage relays K1 and K3 of the high-voltage DC charging compatible adapter device to close successively, then controlling a main positive relay and main negative relay of the battery to close, then controlling the second electric drive 20 to power on and stand by, controlling the first electric drive 10 to run in a buck mode, and buck outputting and setting the target voltage U_{C3R} of capacitor C3 as the min [the current voltage of the battery-10V, 450V] (minimum of a range between the current voltage of the battery-10V and 450V);
operation 8: S801: determining, by the battery controller, whether a measured voltage UC3 of the capacitor C3 is within ±5% of the target voltage UC3R, if yes, S802: sending a charging ready message of the vehicle to the charging pile, and entering operation 9, otherwise returning to S801 continue the detection, if timeout expires, reporting a fault prompt and stopping the charging;
operation 9: S901: determining, by the battery controller, whether receiving the charging ready message of the charging pile, if yes, S902: stopping to send the charging ready message of the vehicle to the charging pile, and entering operation 10, otherwise returning to S901 continue the detection, if timeout expires, reporting a fault prompt and stopping the charging;
operation 10: determining, by the battery controller, whether the maximum allowable output voltage of the charging pile is less than or equal to 500V, if yes, entering operation 11, otherwise skipping to operation 18;
operation 11: sending a charging demand message and a battery charging overall status message of the battery, by the battery controller, to the charging pile, the charging demand message of the battery including a charging required voltage and charging required current of the battery, requiring a voltage to be min [the current voltage of the battery -10V, 450V] (the minimum of a range between the current voltage of the battery -10V and 450V), and requiring a current to be min [20A, the charging required current of the battery] (a minimum of a range between 20A and the charging required current of the battery);
operation 12: sending the control command, by the battery controller, to the multi-motor high-voltage DC charging compatible adapter device controller, the first electric drive controller 11, and the second electric drive controller 21 through the vehicle controller, controlling the high-voltage relays K1 and K3 of the high-voltage DC charging compatible adapter device to keep closed, then controlling the relay K4 to close, then controlling the main positive relay and main negative relay of the battery to close, then controlling the first electric drive 10 and second electric drive 20 to be powered on at the same time and operate in a boost mode, and boost outputting and setting the target voltage UCR of the battery as min [the current voltage of the battery-10V, 450V] (the minimum of a range between the current voltage of the battery-10V and 450V);
operation 13: sending the control command to the multi-motor high-voltage DC charging compatible adapter device controller through the vehicle controller after the battery controller detects that the boost mode of the electric drive runs for 1 minute, and controlling the high-voltage relay K3 of the high-voltage DC charging compatible adapter device to disconnect;
operation 14: S1401: detecting, by the battery controller, whether the output current of the charging pile is greater than 5A, if yes, S1402: adjusting parameters of the charging demand message of the battery, and adjusting the required voltage to rise from 5V/s to min [the maximum allowable total charging voltage of the battery -10V, a maximum allowable total charging voltage of the charging pile -10V] (the minimum of a range between the maximum allowable total charging voltage of the battery -10V and a maximum allowable total charging voltage of the charging pile -10V), requiring the current to be min [20A, the charging demand current of the battery] (the minimum of a range between 20A and the charging demand current of the battery), and then entering operation 15, otherwise returning to S1401 continue to the detection;
operation 15: S1501: detecting, by the battery controller, whether the output voltage of the charging pile is equal to min [the maximum allowable total charging voltage of the battery -10V, the maximum allowable total charging voltage of the charging pile -10V] (the minimum of a range between the maximum allowable total charging voltage of the battery -10V and a maximum allowable total charging voltage of the charging pile -10V), if yes, S1502: adjusting parameters of the charging demand message of the battery, adjusting the required voltage to keep at min [the maximum allowable total charging voltage of the battery -10V, the maximum allowable total charging voltage of the charging pile -10V] (the minimum of a range between the maximum allowable total charging voltage of the battery -10V and a maximum allowable total charging voltage of the charging pile -10V), adjusting the required current to be min [a maximum allowable outputting current of the charging pile, a charging required current of battery] (the minimum of a range between the maximum allowable outputting current of the charging pile and the charging required current of battery), and then entering operation 16, otherwise returning to S1501 continue the detection;
operation 16: S1601: detecting, by the battery controller, whether the battery is fully charged, if yes, S1602: adjusting parameters of the charging demand message of the battery, adjusting the required voltage to keep at min [the maximum allowable total charging voltage of the battery -10V, the maximum allowable total charging voltage of the charging pile -10V] (the minimum of a range between the maximum allowable total charging voltage of the battery -10V and the maximum allowable total charging voltage of the charging pile -10V), adjusting the current to be 0A, and then entering operation 17, otherwise returning to continue the charging;
operation 17: S1701: detecting, by the battery controller, whether the output current of the charging pile is equal to 0A, if yes, S1702: sending the control command to the battery controller, multi-motor high-voltage DC charging compatible adapter device controller, first electric drive controller 11, and second electric drive controller 21 through the vehicle controller, controlling the main positive relay and main negative relay of the battery to disconnect, then controlling the first electric drive 10 and second electric drive 20 to run in no mode, then sending charging statistic information, and then ending the charging;
operation 18: S1801: detecting, by the battery controller, whether the maximum allowable output voltage of the charging pile is greater than 500V, if yes, S1802: sending the charging demand message of the battery and a charging general state message of the battery to the charging pile, the charging demand message of the battery including the charging required voltage of the battery and the charging required current of the battery, requiring the voltage to be the current voltage of the battery and requiring the current to be min [20A, the charging required current of the battery] (the minimum of a range between 20A and the charging required current of the battery);
operation 19: sending the control command, by the battery controller, to the multi-motor high-voltage DC charging compatible adapter device controller, first electric drive controller 11, and second electric drive controller 21 respectively through the vehicle controller, controlling the high-voltage relays K1 and K3 of the multi-motor high-voltage DC charging compatible adapter device remain closed, then controlling the relay K4 to close, then controlling the main positive relay and the main negative relay of the battery to close, then controlling the first electric drive 10 and second electric drive 20 to power on at the same time and run in the boost mode, boost outputting and setting the target voltage UCR of the battery as the current voltage of the battery +10V;
operation 20: S2001: detecting, by the battery controller, whether the output voltage of the charging pile is equal to the current voltage of the battery, if yes, S2002: adjusting the parameters of the charging demand message of the battery, requiring the voltage to be kept at the current voltage of the battery, adjusting the required current to be 0A, and then entering operation 21, otherwise returning to S2001 continue the detection;
operation 21: S2101: detecting, by the battery controller, whether the output current of the charging pile is equal to 0A, if yes, S2102: sending the control command to the multi-motor high-voltage DC charging compatible adapter device controller, first electric drive controller 11, and second electric drive controller 21 through the vehicle controller, controlling the high-voltage relay K1, high-voltage relay K3, and high-voltage relay K4 of the multi-motor high-voltage DC charging compatible adapter device to disconnect successively, then controlling the first electric drive 10 and second electric drive 20 to run in no mode, then controlling the high-voltage relay K2 of the multi-motor high-voltage DC charging compatible adapter device to close, and switching to a direct charging mode;
operation 22: S2201: detecting, by the battery controller, whether the battery is fully charged, if yes, S2202: adjusting parameters of the charging demand message of the battery, adjusting the required voltage to keep at min [the maximum allowable total charging voltage of the battery -10V, the maximum allowable total charging voltage of the charging pile -10V] (the minimum of a range between the maximum allowable total charging voltage of the battery -10V and the maximum allowable total charging voltage of the charging pile -10V), adjusting the current to be 0A, and then entering operation 23, otherwise returning to continue the charging;
operation 23: S2301: detecting, by the battery controller, whether the output current of the charging pile is equal to 0A, if yes, S2302: sending the control command to the battery controller and the multi-motor high-voltage DC charging compatible adapter device controller, controlling the main positive relay and main negative relay of the battery to disconnect, then controlling the high-voltage relay K2 of the multi-motor high-voltage DC charging compatible adapter device to disconnect, then sending charging statistic information, and then ending the charging.

The above-mentioned embodiment is a preferred embodiment of the method of the disclosure, but the embodiment of the method of the disclosure is not limited by the above-mentioned embodiment. Any other changes, modifications, substitutions, combinations, and simplifications that do not deviate from the spirit and principles of the disclosure shall be equivalent replacement methods and shall be included within the protection scope of the disclosure.

## Claims

1. A multi-motor high-voltage DC charging compatible adapter device, comprising a high-voltage relay K1, a high-voltage relay K2, a high-voltage relay K3, a high-voltage relay K4, a resistor R3, a capacitor C3, a high-voltage DC charging compatible adapter device controller, a high-voltage port and a low-voltage port,
wherein
the low-voltage port is connected with the high-voltage DC charging compatible adapter device controller, the low-voltage port comprises a low-voltage power supply port and a low-voltage communication port,
the high-voltage port comprises a positive terminal in+ of a high-voltage DC input terminal, a negative terminal in- of the high-voltage DC input terminal, a positive terminal out+ of a high-voltage DC output terminal, a negative terminal out-A1 of the high-voltage DC output terminal, a negative terminal out-A2 of the high-voltage DC output terminal and a negative terminal out-B of the high-voltage DC output terminal; the positive terminal in+ of the high-voltage DC input terminal and the positive terminal out+ of the high-voltage DC output terminal are respectively connected with a first end of the high-voltage relay K3, a second end of the high-voltage relay K3 is connected with the negative terminal out-A1 of the high-voltage DC output terminal through the resistor R3, the capacitor C3 and the resistor R3 are connected in parallel, a connection point between the negative terminal out-A1 of the high-voltage DC output terminal and the resistor R3 is connected with the negative terminal out-A2 of the high-voltage DC output terminal through the high-voltage relay K4, the connection point between the negative terminal out-A1 of the high-voltage DC output terminal and the resistor R3 is further connected with the negative terminal out-B of the high-voltage DC output terminal through the high-voltage relay K1 and the high-voltage relay K2 successively, a connection point of the high-voltage relay K1 and the high-voltage relay K2 is connected with the negative terminal in- of the high-voltage DC input terminal,
the high-voltage DC charging compatible adapter device controller is configured to be with communication functions, high-voltage relay K2 driving and control functions, high-voltage relay K1 driving and control functions, high-voltage relay K3 driving and control functions, high-voltage relay K4 driving and control functions, capacitor C3 voltage detection and communication functions, and a function of detecting a capacitor voltage UC3 and sending it out in real time through the low-voltage communication port, and the high-voltage DC charging compatible adapter device controller is respectively connected with control terminals of the high-voltage relay K1, the high-voltage relay K2, the high-voltage relay K3, and the high-voltage relay K4.

2. The multi-motor high-voltage DC charging compatible adapter device according to claim 1,further comprising an inductor L1, wherein
the second end of the high-voltage relay K3 is connected with the negative terminal out-A1 of the high-voltage DC output terminal through the resistor R3 and the inductor L1, a connection point between the inductor L1 and the resistor R3 is connected with the negative terminal out-A2 of the high-voltage DC output terminal through the high-voltage relay K4, the connection point between the inductor L1 and the resistor R3 is further connected with the negative terminal out-B of the high-voltage DC output terminal through the high-voltage relay K1 and the high-voltage relay K2 successively.

3. The multi-motor high-voltage DC charging compatible adapter device according to claim 1, further comprising an inductor L1 and an inductor L2, wherein
the second end of the high-voltage relay K3 is connected with the negative terminal out-A1 of the high-voltage DC output terminal through the resistor R3 and the inductor L1, a connection point of the inductor L1 and the resistor R3 is connected with the negative terminal out-A2 of the high-voltage DC output terminal through the inductor L2, the high-voltage relay K4 successively, the connection point between the inductor L1 and the resistor R3 is further connected with the negative terminal out-B of the high-voltage DC output terminal through the high-voltage relay K1 and the high-voltage relay K2 successively.

4. The multi-motor high-voltage DC charging compatible adapter device according to claim 1, further comprising an inductor L2, wherein
a connection point between the negative terminal out-A1 of the high-voltage DC output terminal and the resistor R3 is connected with the negative terminal out-A2 of the high-voltage DC output terminal through the inductor L2 and the high-voltage relay K4 successively.

5. The multi-motor high-voltage DC charging compatible adapter system, further comprising a first electric drive (10) and a first controller (11), a second electric drive (20) and a second controller (21), a battery and a battery controller, a vehicle controller and the multi-motor high-voltage DC charging compatible adapter device according to any one of claim 1 to claim 4, wherein
the positive terminal in+ of the high-voltage DC input terminal of the multi-motor high-voltage DC charging compatible adapter device is connected with a positive terminal (+) of the high-voltage DC charging port, the negative terminal in- of the high-voltage DC input terminal of the multi-motor high-voltage DC charging compatible adapter device is connected with a negative terminal (-) of the high-voltage DC charging port, the positive terminal out+ of the high-voltage DC output terminal of the multi-motor high-voltage DC charging compatible adapter device is connected with a third positive terminal (+B) of the battery controller, the negative terminal out-A1 of the high-voltage DC output terminal of the multi-motor high-voltage DC charging compatible adapter device is connected with a first motor neutral point terminal (N1) of the first electric drive controller (11), the negative terminal out-A2 of the high-voltage DC output terminal of the multi-motor high-voltage DC charging compatible adapter device is connected with a second motor neutral point terminal (N2) of the second electric drive controller (21), the negative terminal out-B of the high-voltage DC output terminal of the multi-motor high-voltage DC charging compatible adapter device is connected with a third negative terminal (-B) of the battery controller, a positive terminal (+) of the first electric drive controller (11) is connected with a first positive terminal (+A1) of the battery controller, a negative terminal (-) of the first electric drive controller (11) is connected with a first negative terminal (-A1) of the battery controller, a positive terminal (+) of the second electric drive controller (21) is connected with a second positive terminal (+A2) of the battery controller, the negative terminal (-) of the second electric drive controller (21) is connected with a second negative terminal (-A2) of the battery controller,
the multi-motor high-voltage DC charging compatible adapter device is connected with the first electric drive controller (11), the second electric drive controller (21), the battery controller and the vehicle controller through a low-voltage wiring harness, and when connecting a charging pile, the high-voltage DC input terminal of the multi-motor high-voltage DC charging compatible adapter device is connected with a high-voltage terminal of the charging pile, and the battery controller is connected with a charging pile controller through a low-voltage wiring harness.

6. A control method of a multi-motor high-voltage DC charging compatible adapter system, using the multi-motor high-voltage DC charging compatible adapter system according to any one of claim 1 to claim 8, after the multi-motor high-voltage DC charging compatible adapter system connected with a high-voltage DC charging pile, the control method comprising:
operation 1: connecting the high-voltage DC charging port with the high-voltage DC charging pile;
operation 2: detecting, by the battery controller, whether physically connecting the charging pile successfully, if yes, powering on, matching a low-voltage auxiliary power supply, and entering operation 3, otherwise returning to continue the detection of operation 2;
operation 3: detecting, by the battery controller, whether receiving a handshake message of the charging pile, if yes, sending a charging handshake message to the charging pile, including a maximum allowable total charging voltage of the battery, and entering operation 4, otherwise returning to continue the detection of operation 3, if timeout expires, reporting a fault prompt and stopping the charging;
operation 4: detecting, by the battery controller, whether receiving an identification message of the charging pile, if yes, sending the identification message of the battery controller and vehicle controller to the charging pile, including battery information and protocol version, and entering operation 5, otherwise returning to continue the detection of operation 4, if timeout expires, reporting a fault prompt and stopping the charging;
operation 5: detecting, by the battery controller, whether receiving an identification message of the charging pile, if yes, stopping sending the identification messages of the battery controller and the vehicle controller to the charging pile, and starting to send charging parameter messages of the battery to the charging pile including a maximum allowable charging voltage, a maximum allowable charging current, and a current battery voltage, when the current battery voltage being min [the current voltage of the battery minus 10V, 450V], entering operation 6, otherwise returning to continue to send the identification messages of the battery controller and the vehicle controller to the charging pile, if timeout expires, reporting a fault prompt and stopping the charging;
operation 6: detecting, by the battery controller, whether receiving a message of a charging pile time synchronization and maximum output capacity, including charging pile time synchronization information, maximum output voltage, minimum output voltage, maximum output current, minimum output current, if yes, stopping sending the parameter messages of the battery to the charging pile, starting to send a message that the vehicle is not ready for charging to the charging pile, and entering operation 7, otherwise reporting a fault prompt and stopping the charging;
operation 7: determining, by the battery controller, whether the charging pile parameters are appropriate, if yes, sending a control command to the multi-motor high-voltage DC charging compatible adapter device controller, the first electric drive controller (11), and the second electric drive controller (21) respectively through the vehicle controller, controlling the high-voltage relays K1 and K3 of the high-voltage DC charging compatible adapter device to turn on successively, then controlling a main positive relay and a main negative relay of the battery to turn on, then controlling the second electric drive (20) to power on and stand by, controlling the first electric drive (10) to run in a buck mode, and buck outputting and setting a target voltage U_{C3R} of capacitor C3 as the min [the current voltage of the battery-10V, 450V];
operation 8: determining, by the battery controller, whether a measured voltage UC3 of the capacitor C3 is within ±5% of the target voltage U_{C3R}, if yes, sending a charging ready message of the vehicle to the charging pile, and entering operation 9, otherwise returning to continue the detection of operation 8, if timeout expires, reporting a fault prompt and stopping the charging;
operation 9: determining, by the battery controller, whether receiving the charging ready message of the charging pile, if yes, stopping to send the charging ready message of the vehicle to the charging pile, and entering operation 10, otherwise returning to continue the detection of operation 9, if timeout expires, reporting a fault prompt and stopping the charging;
operation 10: determining, by the battery controller, whether the maximum allowable output voltage of the charging pile is less than or equal to 500V, if yes, entering operation 11, otherwise skipping to operation 18;
operation 11: sending a charging demand message and a battery charging overall status message of the battery, by the battery controller, to the charging pile, the charging demand message of the battery including a charging required voltage and charging required current of the battery, the required voltage to be min [the current voltage of the battery -10V, 450V], and the required current to be min [20A, the charging required current of the battery];
operation 12: sending the control command, by the battery controller, to the multi-motor high-voltage DC charging compatible adapter device controller, the first electric drive controller (11), and the second electric drive controller (21) through the vehicle controller, controlling the high-voltage relays K1 and K3 of the high-voltage DC charging compatible adapter device to keep closed, then controlling the relay K4 to close, then controlling the main positive relay and main negative relay of the battery to close, then controlling the first electric drive (10) and the electric drive (20) to be powered on at the same time and operate in a boost mode, and boost outputting and setting the target voltage UCR of the battery as min [the current voltage of the battery-10V, 450V];
operation 13: sending the control command to the multi-motor high-voltage DC charging compatible adapter device controller through the vehicle controller after the battery controller detects that the boost mode of the electric drive runs for 1 minute, and controlling the high-voltage relay K3 of the high-voltage DC charging compatible adapter device to disconnect;
operation 14: detecting, by the battery controller, whether the output current of the charging pile is greater than 5A, if yes, adjusting parameters of the charging demand message of the battery, and adjusting the required voltage to rise to min [the maximum allowable total charging voltage of the battery -10V, a maximum allowable total charging voltage of the charging pile -10V] at a speed of 5V/s, the required current remains to be min [20A, the charging demand current of the battery], and then entering operation 15, otherwise returning to continue to the detection of operation 14;
operation 15: detecting, by the battery controller, whether the output voltage of the charging pile is equal to min [the maximum allowable total charging voltage of the battery -10V, the maximum allowable total charging voltage of the charging pile -10V], if yes, adjusting parameters of the charging demand message of the battery, adjusting the required voltage to keep at min [the maximum allowable total charging voltage of the battery -10V, the maximum allowable total charging voltage of the charging pile -10V], adjusting the required current to be min [a maximum allowable outputting current of the charging pile, a charging required current of battery], and then entering operation 16, otherwise returning to continue the detection of operation 15;
operation 16: detecting, by the battery controller, whether the battery is fully charged, if yes, adjusting parameters of the charging demand message of the battery, adjusting the required voltage to keep at min [the maximum allowable total charging voltage of the battery -10V, the maximum allowable total charging voltage of the charging pile -10V], adjusting the current to be 0A, and then entering operation 17, otherwise returning to continue the charging;
operation 17: detecting, by the battery controller, whether the output current of the charging pile is equal to 0A, if yes, sending the control command to the battery controller, multi-motor high-voltage DC charging compatible adapter device controller, the first electric drive controller (11), and the second electric drive controller (21) through the vehicle controller, controlling the main positive relay and main negative relay of the battery to turn off, then controlling the first electric drive (10) and the electric drive (20) to run in no mode, then sending charging statistic information, and then ending the charging;
operation 18: detecting, by the battery controller, whether the maximum allowable output voltage of the charging pile is greater than 500V, if yes, sending the charging demand message of the battery and a charging general state message of the battery to the charging pile, the charging demand message of the battery including the charging required voltage of the battery and the charging required current of the battery, the required voltage to be the current voltage of the battery and the required current to be min [20A, the charging required current of the battery];
operation 19: sending the control command, by the battery controller, to the multi-motor high-voltage DC charging compatible adapter device controller, the first electric drive controller (11), and the second electric drive controller (21) respectively through the vehicle controller, controlling the high-voltage relays K1 and K3 of the multi-motor high-voltage DC charging compatible adapter device remain closed, then controlling the relay K4 to close, then controlling the main positive relay and the main negative relay of the battery to close, then controlling the first electric drive (10) and the second electric drive (20) to power on at the same time and run in the boost mode, boost outputting and setting the target voltage UCR of the battery as the current voltage of the battery +10V;
operation 20: detecting, by the battery controller, whether the output voltage of the charging pile is equal to the current voltage of the battery, if yes, adjusting the parameters of the charging demand message of the battery, the required voltage to be kept at the current voltage of the battery, adjusting the required current to be 0A, and then entering operation 21, otherwise returning to continue the detection of operation 20;
operation 21: detecting, by the battery controller, whether the output current of the charging pile is equal to 0A, if yes, sending the control command to the multi-motor high-voltage DC charging compatible adapter device controller, the first electric drive controller (11), and the second electric drive controller (21) through the vehicle controller, controlling the high-voltage relay K1, high-voltage relay K3, and high-voltage relay K4 of the multi-motor high-voltage DC charging compatible adapter device to disconnect successively, then controlling the first electric drive (10) and the second electric drive (20) to run in no mode, then controlling the high-voltage relay K2 of the multi-motor high-voltage DC charging compatible adapter device to close, and switching to a direct charging mode;
operation 22: detecting, by the battery controller, whether the battery is fully charged, if yes, adjusting parameters of the charging demand message of the battery, adjusting the required voltage to keep at min [the maximum allowable total charging voltage of the battery -10V, the maximum allowable total charging voltage of the charging pile -10V], adjusting the current to be 0A, and then entering operation 23, otherwise returning to continue the charging;
operation 23: detecting, by the battery controller, whether the output current of the charging pile is equal to 0A, if yes, sending the control command to the battery controller and the multi-motor high-voltage DC charging compatible adapter device controller, controlling the main positive relay and main negative relay of the battery to disconnect, then controlling the high-voltage relay K2 of the multi-motor high-voltage DC charging compatible adapter device to disconnect, then sending charging statistic information, and ending the charging.

7. An automobile, comprising the multi-motor high-voltage DC charging compatible adapter system according to any one of claims 1 to 6.
